# EUROPÄISCHE PATENTSCHRIFT

(11) **EP 1 373 721 B1**
(45) Veröffentlichungstag und Bekanntmachung des Hinweises auf die Patenterteilung: **06.06.2007**
(21) Anmeldenummer: 02742857.2
(22) Anmeldetag: 14.03.2002
(51) Int. Cl.: F03D 7/00, F03D 11/00, F03D 7/02

(54) **ÜBERWACHUNG DER BELASTUNG EINER WINDENERGIEANLAGE**
MONITORING THE LOAD OF A WIND ENERGY PLANT
SURVEILLANCE DES CONTRAINTES SUBIES PAR UNE EOLIENNE

(30) Priorität: 17.03.2001 DE 10113039
(43) Veröffentlichungstag der Anmeldung: 02.01.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/002848
(87) Internationale Veröffentlichungsnummer: WO 2002/079645

(56) Entgegenhaltungen:
- EP-A- 0 327 865
- US-A- 4 297 076
- US-A- 4 435 647
- US-A- 4 733 361
- DEWI Magazin, Nr. 15,August 1999, "DEWI/MADE Load Measurements in Spain", H.Seifert & F.N. González Vives XP002208517

## Beschreibung

Die vorliegende Erfindung betrifft eine Windenergieanlage mit einer Vorrichtung zur Überwachung, mit wenigstens einem Sensor zur Erfassung von Messwerten und weiterhin ein Verfahren zur Überwachung einer Windenergieanlage, bei welchem a) mit wenigstens einem Sensor ein Messwert erfasst wird, b) dieser Messwert in ein den Messwert repräsentierendes Signal umgewandelt wird und c) das Signal gespeichert und/oder nach einem vorgegebenen Verfahren verarbeitet wird.

Solche Vorrichtungen und Verfahren sind im Stand der Technik bekannt. In der bei SunMedia Verlags- und Kongressgesellschaft für Emeuerbare Energien mbH Hannover, erscheinenden Zeitschrift "Emeuerbare Energien", Heft 7/2000, Seite 38, ist in einem Beitrag mit der Überschrift "Knackt der Rotor den Turm" eine Schwingungsübenivachung mittels Beschleunigungsmessung erwähnt.

In dem Heft Nr. 5/2000 dieser Zeitschrift ist auf Seite 37 in Absatz 2 beschrieben, dass es sich bei den heute von mehreren Herstellern angebotenen Schwingungswächtem um Beschleunigungsaufnehmer handelt. Weiterhin wird dort ein Verfahren beschrieben, bei dem mittels einer Elektronik gezielt gefährliche Frequenzen verstärkt werden.

Dieser Stand der Technik erlaubt eine Erfassung von Schwingungen des Turmkopfes in bestimmten Frequenzbereichen. Diese Schwingungen bilden einen Teil der Belastungen des Turmes. Dabei ist der Turm für eine vorgegebene Summe an Belastungen während seiner vorgesehenen Lebensdauer von z.B. 20 Jahren ausgelegt.

Jede Belastung leistet einen Beitrag zur Materialermüdung. Daher ist leicht nachvollziehbar, dass an Standorten mit einer Vielzahl hoher Belastungen die Ermüdung schneller voranschreitet, als bei Standorten mit wenigen, geringen Belastungen.

Hier ergibt sich also bei angenommenem gleichem zeitlichen Alter der Türme ein unterschiedliches "mechanisches" Alter. Dabei kann es vorkommen, dass der geringer belastete Turm bei Erreichen seiner zeitlichen Altersgrenze von 20 Jahren mechanisch erst eine Belastung erfahren hat, die bei der Auslegung bereits nach 15 Jahren vorgesehen war, so dass er durchaus noch in Betrieb bleiben kann. Natürlich ist auch der umgekehrte Fall denkbar, bei dem ein Turm bereits nach 15 Jahren ein mechanisches Alter von 20 Jahren erreicht hat.

Windenergieanlagen mit einer Vorrichtung zur Belastungsüberwachung sind beispielsweise bekannt aus "DEWI Magazin, Nr. 15, August 1999, 'DEWI/MADE Load Measurements in Spain", H. Seifert & F.N. González Vives XP002208517". Dieser Artikel offenbart eine Windenergieanlage, bei der Belastungssensoren an den Rotorblättern, der Welle und an dem Turm angeordnet sind. Weiterhin ist beispielsweise aus der US, 4,297,076 eine Windenergieanlage mit verstellbaren Rotorblättern bekannt, wobei Belastungssensoren an den Rotorblättern angeordnet sind und die Belastungen messen, welche auf die Rotorblätter einwirken. In Abhängigkeit zu diesen Belastungen wird der Pitch der Rotorblätter geregelt, um die Biegemomente der Rotorblätter auszugleichen:

Mit den bisherigen Einrichtungen kann das mechanische Lebensalter eines Turmes noch nicht ausreichend erfasst werden, so dass letztlich auch nur vage Abschätzungen über die Lebensdauer eines Turms und damit eines der wichtigsten Anlagenteile der Windenergieanlage vorgenommen werden können.

Aufgabe der vorliegenden Erfindung ist es, eine Vorrichtung und ein Verfahren anzugeben, welches eine zuverlässige Erfassung der Belastung der Windenergieanlage sowie eine zuverlässige Abschätzung von wichtigen Teilen der Windenergieanlage ermöglicht.

Die Aufgabe wird erfindungsgemäß mit einer Windenergieanlage mit dem Merkmal nach Anspruch 1 gelöst. Vorteilhafte Weiterbildungen sind in den Unteransprüchen beschrieben.

Der Erfindung liegt die Erkenntnis zugrunde, dass alle Lasten, die an einer Windenergieanlage auftreten, auf den Turm der Anlage einwirken. Wenn der Turmfuß das halbe Lastkollektiv erfahren hat, können die übrigen Komponenten wie Blätter, Maschinenträger, Turmkopf, Turm, etc. kaum einen signifikant höheren Anteil des Lastkollektivs erfahren haben.

Schließlich kann die Last am Turmfuß nicht einer Situation mit einer Windgeschwindigkeit von beispielsweise 4 m/s entsprechen, während die Last an anderen Komponenten zum Beispiel einer Windgeschwindigkeit von 8 m/s entspricht. Eine Erfassung der Belastung des Turmes erlaubt also einen Rückschluss auf die Belastungen, denen die Windenergieanlage an ihrem Standort insgesamt ausgesetzt ist.

Da die Windenergieanlage vereinfacht als einseitig eingespannter Stab betrachtet werden kann, ist die Summe aller auf die Windenergieanlage einwirkenden Lasten am Turmfuß erfassbar. Eine Anordnung wenigstens eines Sensors im Bereich des Turmfußes ermöglicht also eine zuverlässige Erfassung der Belastung der Windenergieanlage. Gleichzeitig ist der Sensor ohne Hilfsmittel und ohne großen Aufwand erreichbar.

In einer bevorzugten Ausführungsform der Erfindung erfolgt die Erfassung der Belastung durch einen auf DMS (Dehnungsmessstreifen) basierenden Sensor. Durch einen solchen Sensor kann mit ausreichender Genauigkeit unter Verwendung einer bekannten und erprobten Technik die Belastung zuverlässig erfasst werden.

Die von dem Dehnungsmessstreifen erfassten Messwerte werden besonders bevorzugt in analoge oder digitale elektrische Signale umgewandelt, welche die Messwerte repräsentieren. Diese Signale können auf einfache Weise übertragen und weiterverarbeitet werden.

Eine solche Weiterverarbeitung kann ein Vergleich mit einem Grenzwert sein, um z. B. Last-Maxima oder das Erreichen bzw. Überschreiten vorgebbarer Lastgrenzen erkennen zu können. Weiterhin können die Messwerte kumuliert und für eine folgende Verarbeitung bzw. Auswertung gespeichert werden.

Natürlich kann auch das Ergebnis der Kumulation wiederum mit einem vorgebbaren Grenzwert verglichen werden. Auf diese Weise lässt sich die Belastung der Anlage in Relation zu den Auslegungslasten betrachten und somit eine Abschätzung des mechanischen Lebensalters der Anlage vornehmen.

Weiterhin wird das eingangs erwähnte Verfahren derart weitergebildet, dass aus dem Signal des Sensors die Momentanbelastung der Windenergieanlage ermittelt wird. Da bei umfangreichen Messungen am Prototyp einer Windenergieanlage auch die Korrelation der Lastsituationen an verschiedenen Komponenten der Windenergieanlage ermittelt werden, stehen Daten zur Verfügung, die einen Rückschluss aus der Turmfußlast auf die Last der übrigen Komponenten erlauben.

Durch eine Kumulation aller ermittelten Belastungen kann die Gesamtbelastung der Windenergieanlage und damit ihr mechanisches Lebensalter ermittelt werden.

Durch eine Korrelation der momentanen Belastung mit dem momentanen Wind kann überprüft werden, ob die ermittelte Momentanbelastung der Windenergieanlage einer in etwa erwarteten Größenordnung entspricht. Auf diese Weise kann die einwandfreie Funktion der erfindungsgemäßen Vorrichtung überwacht werden.

Die gemessenen Belastungsdaten werden in einer Steuerungseinrichtung der Windenergieanlage auch derart weiterverarbeitet, dass bei Auftreten einer Überlastung die Steuerungseinrichtung Maßnahmen ergreift, die zu einer Verringerung der Belastung führen. Eine solche Verringerung der Belastung kann beispielsweise durch Verstellung der Rotorblätter (aus dem Wind) erfolgen, oder auch durch eine Reduzierung der Drehzahl des Rotors der Windenergieanlage. Auch könnte zur Verringerung der Belastung der gesamte Rotor der Windenergieanlage um einen bestimmten Winkel aus dem Wind gedreht werden.

Das erfindungsgemäße Verfahren führt zu einer Angabe der von der Windenergieanlage bisher erfahrenen Lastsumme in Relation zu den Auslegungslasten. Diese Relation kann ebenso wie einzelne Messwerte und/oder die kumulierte Belastung in der Anlage gespeichert und/oder verarbeitet werden. Weiterhin können diese Daten z. B. regelmäßig zu einer entfernten Stelle wie einer Fernüberwachung übertragen oder von dort abgefragt werden.

Im Folgenden wird eine beispielhafte Ausführungsform der Erfindung erläutert. Dabei zeigen:
- Fig. 1: eine vereinfachte Darstellung einer Windenergieanlage;
- Fig. 2: eine Anordnung von Sensoren; und
- Fig. 3: ein Ablaufdiagramm des erfindungsgemäßen Verfahrens.

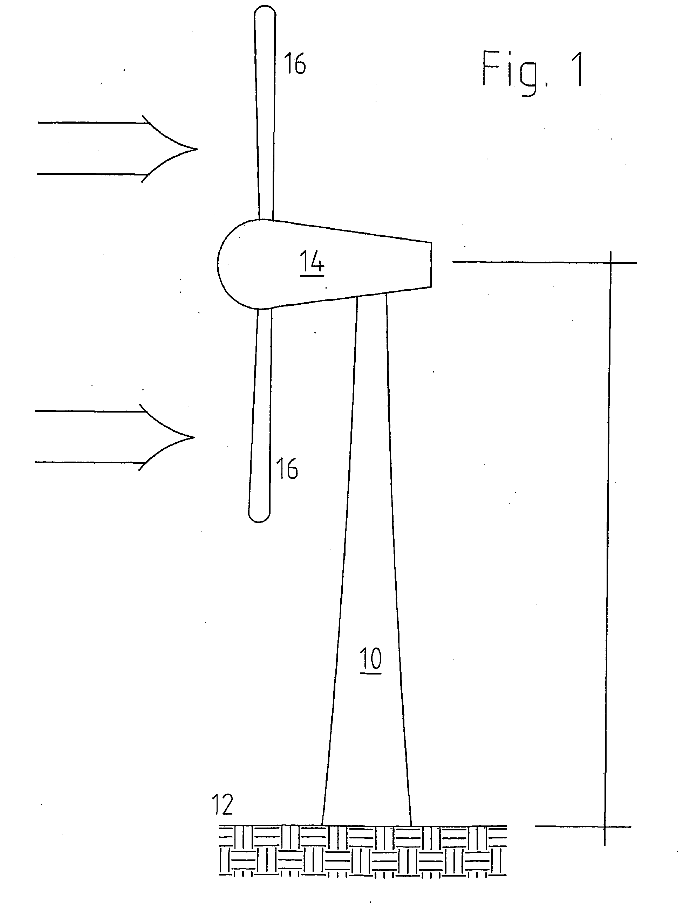

Figur 1 zeigt einen Turm 10 einer Windenergieanlage, der mit einem Fundament 12 verbunden ist. Am Kopf des Turmes 10 ist eine Gondel 14 angeordnet, die einen Rotor mit Rotorblättern 16 aufweist. Der Pfeil deutet in dieser Figur die Windrichtung an.

Durch den Wind wird einerseits der Rotor und damit der nachfolgend mechanisch gekoppelte Teil der Windenergieanlage in Rotation versetzt, um elektrische Energie zu erzeugen. Gleichzeitig wird aber durch den Winddruck einerseits der Turm 10 beaufschlagt und andererseits die Gondel 14 mit dem Rotor in Richtung des Windes ausgelenkt. Dadurch entsteht an dem einseitig eingespannten Turm 10 über den Hebelarm der Turmlänge am Fundament 12 ein Biegemoment.

Durch die Kraftwirkung am Turmkopf ergibt sich ein Kraftverlauf über die gesamte Turmlänge, so dass die Wechsellasten bzw. Schwingungen entsprechende Materialermüdung bewirkten.

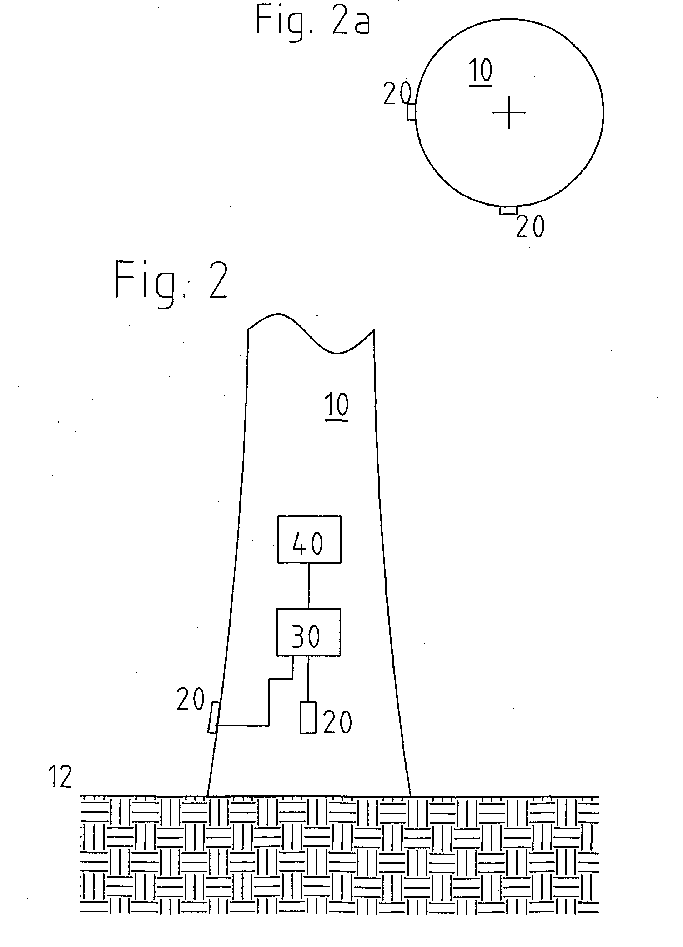

In Figur 2 ist eine Anordnung von zwei Sensoren 20 im Bereich des Turmfußes angezeigt. Diese Sensoren 20 können z. B. auf der Basis von DMS (Dehnungsmessstreifen) arbeiten und die Beanspruchung am Turmfuß erfassen. Diese Beanspruchung lässt einen recht genauen Rückschluss auf die Gesamtbeanspruchung der Windenergieanlage zu. Statt der Anordnung von nur zwei Sensoren kann es u.U. auch vorteilhaft sein, eine Vielzahl von Sensoren über den Umfang des Turmfußes verteilt anzuordnen, um somit für eine Vielzahl von Hauptwindrichtungen Sensoren so zur Verfügung zu stellen, dass diese die jeweiligen auftretenden maximalen Zug/Drucklasten auf den Turmfuß ermitteln können.

Ferner können die mit den Sensoren ermittelten Signale/Daten in einer Steuerungseinrichtung der Windenergieanlage (nicht dargestellt) so weiterverarbeitet werden, dass bei einmaliger, mehrfacher oder zeitweiser Überschreitung von vorgegebenen Maximalwerten die gesamte Belastung der Windenergieanlage herabgesetzt wird, indem beispielsweise mittels der Steuerung die Drehzahl des Rotors der Windenergieanlage verringert wird und/oder die einzelnen Rotorblätter um einen vorbestimmten Winkel so aus dem Wind gedreht werden, dass die durch den Rotor bzw. dessen Winderfassung einwirkende Belastung herabgesetzt wird.

Diese zweite Einrichtung 40 kann die elektrischen Signale erfassen und auswerten bzw. verarbeiten. Die Messwerte können z. B. mit einem ersten Grenzwert verglichen werden, der eine vorgegebene Belastungsgrenze markiert. Erreicht oder überschreitet der Messwert diesen ersten Grenzwert, kann ein Signal ausgelöst werden, dass eben dieses anzeigt.

Tritt eine solche Erreichung/Überschreitung des Grenzwertes, also im vorliegenden Beispiel einer Belastungsgrenze, wiederholt auf, erlaubt dies den Rückschluss auf eine systematische Abweichung von vorher getroffenen Belastungsannahmen. Daraufhin kann die Ursache dafür, wie z. B. eine falsche Steuerung der Windenergieanlage oder eine standortabhängige Extremsituation, eingegrenzt werden, so dass Abhilfe geschaffen werden kann.

Durch eine fortgesetzte, kumulierte Aufzeichnung und dem kontinuierlichen Vergleich mit den Auslegungslasten kann die mechanische Alterung des Turmes ständig überwacht werden.

Die Speicherung der Belastungsdaten hat auch den Vorteil, das bei eventuell auftretendem Schaden am Turm der Windenergieanlage leichter der Nachweis geführt werden kann, ob bestimmte Überlastphasen eingetreten sind und die maximal auftretenden Belastungen eingehalten wurden.

Schließlich ist es auch von Vorteil, wenn die gemessenen Lastdaten einer Windenergieanlage zentral erfasst werden und für den Fall, dass die gemessenen Belastungsdaten häufig oder ständig einen bestimmten Maximalwert überschreiten, können seitens des Betreibers rechtzeitig Maßnahmen ergriffen werden, die die vorzeitige mechanische Alterung des Turmes verhindern. Eine solche Maßnahme kann beispielsweise auch darin bestehen, bestimmte Elemente der Windenergieanlage, auch z.B. den Turm zu verstärken.

Statt eines Dehnungsmessstreifens kann zur Belastungserfassung auch jedwede andere Vorrichtung verwendet werden, mittels derer sich Zugkräfte und/oder Druckkräfte und/oder Torsionskräfte und/oder Schwingungen bzw. deren Amplituden im Turm, insbesondere der Turmspitze einer Windenergieanlage erfassen lassen.

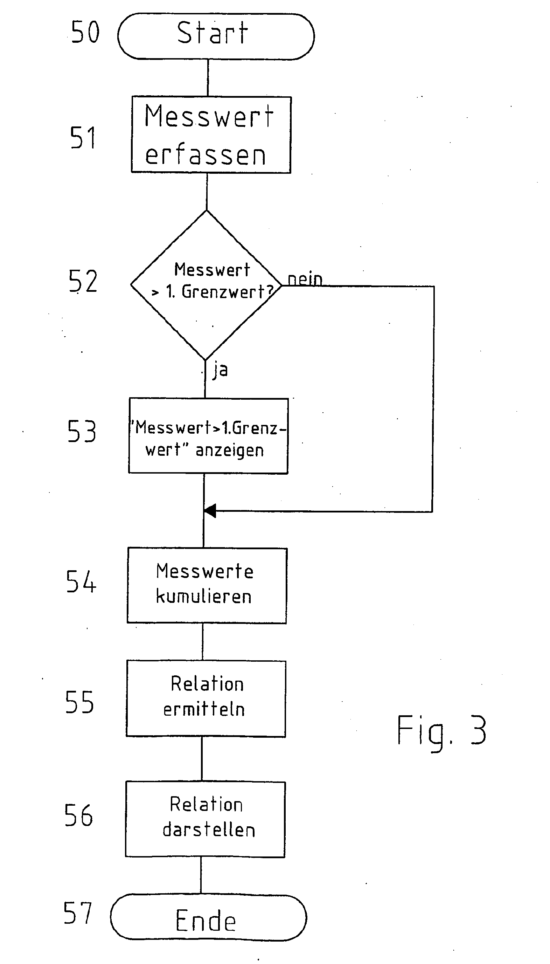

Figur 3 zeigt ein Ablaufdiagramm eines erfindungsgemäßen Verfahrens. Der Ablauf beginnt mit dem Schritt 50 und in Schritt 51 wird der Messwert erfasst. In Schritt 52 wird der erfasste Messwert mit einem ersten Grenzwert verglichen. Übersteigt der Messwert diesen ersten Grenzwert, wird eben dieses in Schritt 53 angezeigt. Übersteigt der Messwert den ersten Grenzwert nicht, wird der Schritt 53 übersprungen.

In Schritt 54 werden die Messwerte kumuliert, so dass die bisher von der Windenergieanlage erfahrene Gesamtbelastung ermittelt wird. Diese Gesamtbelastung wird in Schritt 55 in Relation zu den Auslegungslasten gesetzt. Daraus lässt sich das mechanische Lebensalter ablesen, also das von der Windenergieanlage bereits erfahrene Lastkollektiv in Relation zu dem Auslegungs-Lastkollektiv. Diese Relation wird in Schritt 56 dargestellt, bevor der Ablauf in Schritt 57 endet.

Die Darstellung kann z. B. nach einer Datentibermittlung in einer Femüberwachungszentrale oder bei dem Betreiber der Windenergieanlage erfolgen und die Form einer Balkengrafik, einer Tortengrafik oder jede andere geeignete Darstellungsform haben.

## Patentansprüche

1. Windenergieanlage mit einer Vorrichtung zur Überwachung der Belastung von Teilen der Windenergieanlage oder der gesamten Windenergleanlage, wobei die Vorrichtung im Bereich des Turmfußes der Windenergleanlage angeordnet ist und Mittel aufweist mit denen die Belastungen des Turmes im Bereich des Turmfußes messbar sind,
**dadurch gekennzeichnet, dass** die Windenergieanlage eine Steuerungseinrichtung aufweist, welche die zu messenden Daten zur Erfassung der Belastung des Turmes verarbeitet und die Windenergieanlage so steuert, dass eine Reduzierung der Drehzahl des Rotors der Windenergieanlage und/oder eine Herabsetzung der Belastung der Windenergieanlage mittels Verstellung der Rotorblätter erfolgt, wenn die gemessenen Daten einmal, mehrmals und/oder über einen gewissen Zeitraum einen bestimmten Maximalwert überschreiten.

2. Windenergieanlage nach Anspruch 1,
**dadurch gekennzeichnet, dass** die Vorrichtung zur Erfassung der Belastung des - Turmes im Bereich des Turmfußes ein auf Dehnungsmessstreifen (DMS) basierender Sensor ist

3. Windenergieanlage nach einem der vorstehenden Ansprüche,
**gekennzeichnet durch** eine erste Einrichtung (30) zur Umwandlung der (von dem Sensor (20)) erfassten Messwerte in analoge oder digitale elektrische Signale, weiche die Messwerte repräsentieren.

4. Vorrichtung nach Anspruch 3,
**gekennzeichnet durch** eine zweite Einrichtung (40) zur Erfassung der elektrischen Signale und zum Vergleichen des **durch** das Signal repräsentierten Messwertes mit wenigstens einem vorgebbaren ersten Grenzwert und zum Anzeigen, wenn der Grenzwert erreicht oder überschritten wird; und/oder zum Speichern und/oder Kumulieren der **durch** das elektrische Signal repräsentierten Messwerte.

5. Vorrichtung nach einem der vorstehenden Ansprüche,
**gekennzeichnet durch** eine Einrichtung zur Übertragung von Signalen, welche einzelne Messwerte und/oder die kumulierten Messwerte und/oder eine Relation der kumulierten Messwerte zu einem vorgebbaren zweiten Grenzwert darstellen.

6. Verfahren zur Überwachung einer Windenergieanlage, bei welchem mittels eines Messwertdatenaufnehmers Daten für die Belastung auf die Windenergieanlage erfasst werden, die Messwertdaten gespeichert und aus den Messwertdaten die Momentanbelastung der gesamten Windenergieanlage ermittelt wird,
**dadurch gekennzeichnet, dass** die Windenergieanlage mittels einer Steuerungseinrichtung die zu messenden Daten zur Erfassung der Belastung des Turmes verarbeitet und die Windenergieanlage so steuert, dass eine Reduzierung der Drehzahl des Rotors der Windenergieanlage und/oder eine Herabsetzung der Belastung der Windenergieanlage mittels Verstellung der Rotorblätter erfolgt, wenn die gemessenen Daten einmal, mehrmals und/oder über einen gewissen Zeitraum einen bestimmten Maximalwert überschreiten.

7. Verfahren nach Anspruch 6,
**dadurch gekennzeichnet, dass** die ermittelten Momentanbelastungen kumuliert werden.

8. Verfahren nach Anspruch 6,
**dadurch gekennzeichnet, dass** die ermittelte Momentanbelastung mit dem momentan gemessenen Wind korreliert wird.

9. Verfahren nach einem der Ansprüche 6 bis 8,
**dadurch gekennzeichnet, dass** der Messwert mit einem vorgebbaren ersten Grenzwert verglichen und ein Erreichen oder Überschreiten des Grenzwertes angezeigt wird.

10. Verfahren nach einem der Ansprüche 7 bis 9,
**dadurch gekennzeichnet, dass** die kumulierten Messwerte in Relation zu einem vorgebbaren zweiten Grenzwert gesetzt werden.

11. Verfahren nach Anspruch 10,
**dadurch gekennzeichnet, dass** die Relation zwischen den kumulierten Messwerten und dem zweiten Grenzwert dargestellt wird.

## Claims

1. Wind power installation having an apparatus for monitoring the loading of parts of the wind power installation or of the wind power installation in its entirety, wherein the apparatus is disposed in the region of the foot of the tower of the wind power installation and has means with which the loading of the tower in the region of the foot of the tower can be measured,
**characterised in that** the wind power installation has a control device which processes the data to be measured for detecting the loading of the tower and controls the wind power installation in such a manner that a reduction in the rotation speed of the rotor of the wind power installation and/or a reduction in the loading of the wind power installation is effected by means of adjustment of the rotor blades when the measured data exceed a given maximum value once, a plurality of times and/or over a certain period of time.

2. Wind power installation according to claim 1,
**characterised in that** the apparatus for detecting the loading of the tower in the region of the foot of the tower is a sensor based on resistance strain gauges (RSGs).

3. Wind power installation according to one of the preceding claims,
**characterised by** a first device (30) for converting the detected measured values (detected by the sensor 20) into analogue or digital electrical signals representing the measured values.

4. Apparatus according to claim 3,
**characterised by** a second device (40) for detecting the electrical signals and for comparing the measured value represented by the signal with at least one predefinable first limit value and for indicating when the limit value is reached or exceeded; and/or for storing and/or cumulating the measured values represented by the electrical signal.

5. Apparatus according to any one of the preceding claims,
**characterised by** a device for transmitting signals representing individual measured values and/or the cumulated measured values and/or a relationship of the cumulated measured values to a predefinable second limit value.

6. Method for monitoring a wind power installation, in which data for the loading on the wind power installation are detected by means of a measured value data pickup, the measured value data are stored and the instantaneous loading of the wind power installation in its entirety is determined from the measured value data,
**characterised in that** the wind power installation processes the data to be measured for detecting the loading of the tower by means of a control device and controls the wind power installation in such a manner that a reduction in the rotation speed of the rotor of the wind power installation and/or a reduction in the loading of the wind power installation is effected by means of adjustment of the rotor blades when the measured data exceed a given maximum value once, a plurality of times and/or over a certain period of time.

7. Method according to claim 6,
**characterised in that** the instantaneous loadings determined are cumulated.

8. Method according to claim 6,
**characterised in that** the instantaneous load determined is correlated with the instantaneously measured wind.

9. Method according to any one of claims 6 to 8,
**characterised in that** the measured value is compared with a predefinable first limit value and attainment or exceeding of the limit value is indicated.

10. Method according to any one of claims 7 to 9,
**characterised in that** the cumulated values are set in relation to a predefinable second limit value.

11. Method according to claim 10,
**characterised in that** the relationship between the cumulated measured values and the second limit value is displayed.

## Revendications

1. Eolienne avec un dispositif de surveillance des contraintes subies par des parties de l'éolienne ou par l'ensemble de l'éolienne, le dispositif étant disposé au niveau du pied de la tour de l'éolienne et comportant des moyens permettant de mesurer les contraintes subies par la tour au niveau du pied de la tour,
**caractérisée en ce que** l'éolienne comporte un dispositif de commande, qui traite les données à mesurer pour la détection des contraintes subies par la tour et commande l'éolienne de telle manière qu'il se produit une réduction de la vitesse de rotation du rotor de l'éolienne et/ou une diminution des contraintes subies par l'éolienne, en réglant les pales de rotor, lorsque les données mesurées une fois, plusieurs fois et/ou pendant un certain laps de temps dépassent une valeur maximum déterminée.

2. Eolienne selon la revendication 1,
**caractérisée en ce que** le dispositif de détection des contraintes subies par la tour au niveau du pied de la tour est un capteur basé sur des jauges de contraintes (DMS).

3. Eolienne selon l'une des revendications précédentes,
**caractérisée par** un premier dispositif (30) utilisé pour convertir les valeurs mesurées (détectées par le capteur (20)) en signaux électriques analogiques ou numériques représentant les valeurs mesurées.

4. Dispositif selon la revendication 3,
**caractérisé par** un deuxième dispositif (40) utilisé pour détecter les signaux électriques et pour comparer la valeur mesurée représentée par le signal avec au moins une première valeur limite pouvant être prédéfinie et pour indiquer si la valeur limite est atteinte ou dépassée ; et/ou pour stocker et/ou cumuler les valeurs mesurées représentées par le signal électrique.

5. Dispositif selon l'une des revendications précédentes,
**caractérisé par** un dispositif utiliser pour transmettre des signaux représentant des valeurs mesurées individuelles et/ou des valeurs mesurées cumulées et/ou un rapport entre les valeurs mesurées cumulées et une deuxième valeur limite pouvant être prédéfinie.

6. Procédé de surveillance d'une éolienne, dans lequel des données sont détectées au moyen d'un capteur de données de valeurs mesurées pour les contraintes exercées sur l'éolienne, les données des valeurs mesurées sont stockées et les contraintes instantanées subies par l'ensemble de l'éolienne sont détectées à partir des données des valeurs mesurées,**caractérisé en ce que** l'éolienne traite les données à mesurer pour la détection des contraintes subies par la tour au moyen d'un dispositif de commande, qui commande l'éolienne de telle manière qu'une réduction de la vitesse de rotation du rotor de l'éolienne et/ou une diminution des contraintes subies par l'éolienne se produisent par le réglage des pales de rotor, lorsque les données mesurées une fois, plusieurs fois et/ou pendant un certain laps de temps dépassent une valeur maximum déterminée.

7. Procédé selon la revendication 6, **caractérisé en ce que** les contraintes instantanées détectées sont cumulées.

8. Procédé selon la revendication 6, **caractérisé en ce que** les contraintes instantanées détectées sont associées au vent mesuré instantanément.

9. Procédé selon l'une des revendications 6 à 8,
**caractérisé en ce que** la valeur mesurée est comparée à une première valeur limite pouvant être définie et il est indiqué si la valeur limite est atteinte ou dépassée.

10. Procédé selon l'une des revendications 7 à 9,
**caractérisé en ce que** les valeurs mesurées cumulées sont posées par rapport à une deuxième valeur limite pouvant être définie.

11. Procédé selon la revendication 10,
**caractérisé en ce que** le rapport entre les valeurs mesurées cumulées et la deuxième valeur limite est représenté.
